# EUROPEAN PATENT SPECIFICATION

(11) **EP 2 011 721 B1**
(45) Date of publication and mention of the grant of the patent: **18.04.2012**
(21) Application number: 08017824.7
(22) Date of filing: 15.11.2001
(51) Int. Cl.: B62D 25/08, B62D 27/04

(54) **Reinforcement structure of a vehicle body frame**
Verstärkungsstruktur einer Fahrzeugkarosserie
Structure de renforcement de la carrosserie d'un véhicule

(30) Priority: 15.11.2000 JP 2000347574; 20.08.2001 JP 2001248871
(43) Date of publication of application: 07.01.2009
(62) Divisional of application: 01127160.8
(73) Proprietor: Yamaha Hatsudoki Kabushiki Kaisha, Iwata-shi, Shizuoka 438-8501 (JP)
(72) Inventor: Sawai, Seiji, Iwata-shi Shizuoka-ken 438-8501 (JP); Sakai, Kouji, Iwata-shi Shizuoka-ken 438-8501 (JP)
(74) Representative: Grünecker, Kinkeldey, Stockmair & Schwanhäusser

(56) References cited:
- EP-A- 0 760 437
- EP-A- 0 955 228
- GB-A- 2 219 840
- US-A- 6 007 123

## Description

The present invention relates to a vehicle body frame having a reinforcement structure.

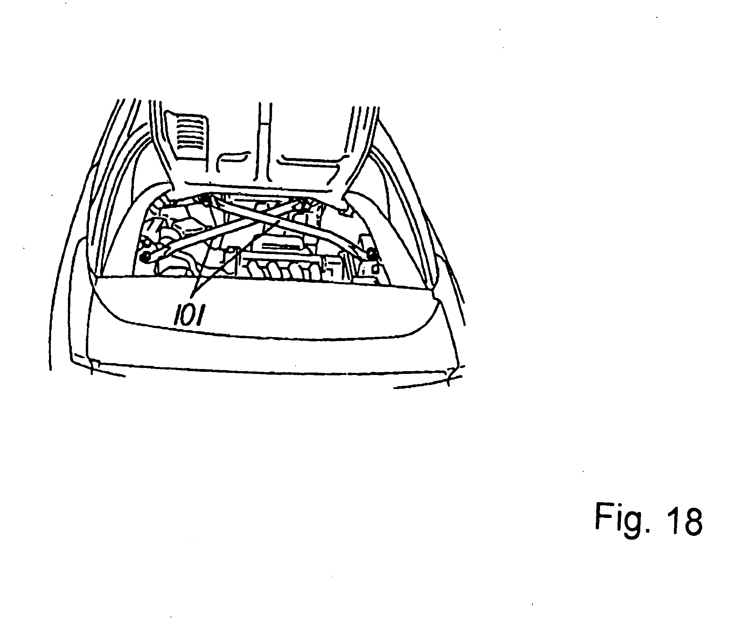

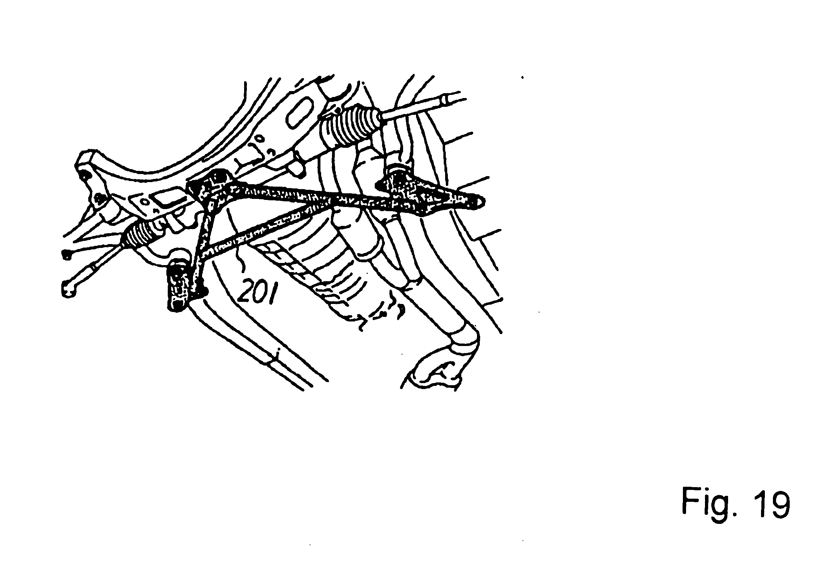

For vehicles such as automobiles, the vehicle body is reinforced with a reinforcing member made of metal in order primarily to increase rigidity of the vehicle body. To this reinforcing member is mainly applied an axial force, and for example, the two reinforcing members 101 are installed over crisscross in an engine compartment of the automobile as shown in FIG.18, and alternatively the reinforcing member 201 is installed over the lower surface of the front of the automobile as shown in FIG. 19.

The conventional reinforcing member, however, is made integrally out of an elastic body such as metal. Therefore, the energy generated due to deformation is accumulated almost as it is in the reinforcing member to produce the phenomenon of this accumulated energy being released back again as resiliency. The repetition of the vibratory deformation of the reinforcing member allows the dynamic deformation velocity to be increased to deteriorate drivability of and comfortableness to ride the vehicle.

Thus, when the rigidity of the reinforcing member is improved so as to keep the absolute amount of the deformation of the reinforcing member small, such problems will arise as increased weight and stress concentration in the periphery of the mounting parts.

US 6,007,123 discloses an energy absorbing bumper, wherein two parallel frame rails are connected to each other by a substantially arc-shaped bumper beam. At proximate ends of the bumper beam, mounting brackets are located between said proximate ends and the frame rails. The opposed proximate ends are interconnected by a tension cable/tube which carries a tension load. Along the length of said tension cable/tube, a tension energy absorber is located.

GB 2 219 840 A discloses a hydraulic damper with a cylinder and a piston. Said piston is connected to a piston rod and separates a first oil chamber from a second oil chamber. Both oil chambers are fluidly connected to each other by a first oil passage and a second oil passage. In terms of a hydraulic damper for use in a vehicle, it is taught that the damping force generated in extension strokes becomes larger than in contraction strokes.

It is an objective of the present invention to provide an improved vehicle body frame having a reinforcement structure with an increased drivability of and an increased comfortableness to ride the vehicle, however, avoiding an increase in weight and stress concentration in the periphery of the mounting parts.

According to the present invention, this objective is solved by a vehicle body frame having a reinforcement structure according to independent claim 1.

Accordingly, the invented vehicle body frame having the reinforcement structure for reinforcing same against axial loads acting on said vehicle body comprises a reinforcing member having a damping force generating means for generation of a viscous damping force against said axial load applied to the reinforcing member.

The viscous damping force generated by the damping force generating means can suppress the velocity and overshooting of the axial deformation of the reinforcing member. This helps to reduce the vibratory deformation of the vehicle body without enhancing in the extreme the static rigidity of the reinforcing member to improve the drivability of and comfortableness to ride the vehicle. Additionally, since there is no need to excessively enhance the static rigidity, the increased weight and the stress concentration in the periphery of the mounting parts of the reinforcing member can be prevented. Thus, major modification to the vehicle body is unnecessary and a vehicle can be upgraded without causing an increase in weight and stress concentration in the periphery of the mounting parts.

As the damping force generating means includes the hydraulic damper or an oil damper to generate the damping force with liquid and orifices, the degree of freedom for setting the damping characteristics can be upgraded, while the damping characteristics can be stabilized.

As the damping force characteristics of the damping force generating means are varied on the tension and compression sides of the axial deformation, respectively, a more ideal damping characteristics can be achieved for the input pattern inputted in the vehicle body in the actual running of the vehicle.

According to a preferred embodiment, the reinforcing member interconnects opposite walls, in particular open ends of the reinforcement structure of the vehicle body, wherein an axial deformation of the reinforcing member is caused by an axial compression force or an axial tension force generated by a relative motion between the opposite walls of the reinforcement structure.

Thus, in this embodiment, the vehicle body structure is constituted by coupling the opposite sides of the vehicle body frame, in particular the open ends of the vehicle body frame together with the vehicle reinforcing member having the damping force generating means to generate the viscous damping force against the axial deformation.

Consequently, the vibration of the vehicle body in connection with the motion of the opposite sides of the frame of the vehicle body can effectively be absorbed by the damping force generated by the damping force generating means of the vehicle reinforcing member. This helps to reduce the vibration of the vehicle body to improve the drivability of and comfortableness to ride the vehicle.

According to a further preferred embodiment, the reinforcement structure comprises a first element of the reinforcing member, attached to one of the opposite walls of the reinforcement structure, and a second element, attached to the respective other wall of the opposite walls of the reinforcement structure, wherein the first and the second element are arranged in a predetermined relationship to each other and the damping force generating means is adapted to generate a restoring force against a relative movement of the first and the second element.

It is also beneficial if the reinforcement structure comprises a piston rod having a piston integrally formed in an intermediate part of the piston rod, a cylinder, wherein the piston rod is inserted into the cylinder and the piston is slidably fitted in the internal peripheral surface of the cylinder by means of a piston ring, and two oil chambers filled with a hydraulic liquid and provided on opposite sides of the piston, wherein the piston ring comprises multiple orifices enabling liquid communication between the oil chambers.

Alternatively to this, the damping force generating means can comprise a cylinder and an elongated rod, wherein the elongated rod is interconnected to a piston rod of the hydraulic damper. It can further comprise a piston mounted inside the cylinder, wherein the piston rod extends outside the cylinder from the piston, two chambers filled with a hydraulic liquid and arranged on opposite sides of the piston in the cylinder, wherein orifices are formed in the piston for communicating the both chambers, and a charged gas chamber defined by a free piston provided in the cylinder. It may additionally comprise an axial force cancellation means adapted to cancel the force of axially pushing the piston rod out with the pressure inside the gas chamber in the unloaded condition in which no axial force is applied to either end of the hydraulic damper, wherein the axial force cancellation means comprises an elastic member for biasing the piston and piston rod in one direction. Thus, in an unloaded condition with which no axial force is applied to the hydraulic damper, the axial force of the piston rod produced by the pressure inside the gas chamber is cancelled by the axial force cancellation means. Therefore, the excessive input in the vehicle body can be reduced. Also, the length of the hydraulic damper can be near to the assembly size in the unloaded condition, thereby facilitating to mount the vehicle reinforcing member onto the vehicle body.

Further preferred embodiments of the present invention are laid down in the further subclaims.

In the following, the present invention is explained in greater detail with respect to several embodiments thereof in conjunction with the accompanying drawings, wherein:
- FIG. 1: is a schematic top plan view of an automobile, showing an example of the reinforcing member according to a first embodiment in use;
- FIG. 2: is a sectional view along the line A-A in FIG. 1;
- FIG. 3: is a perspective view of the front suspensions of the automobile;
- FIG. 4: is a sectional view of the reinforcing member according to the first embodiment;
- FIG. 5: is an enlarged detail view of B part in FIG.4;
- FIG. 6: is an enlarged sectional view along the line C-C in FIG. 5;
- FIG. 7: is a sectional view of a second reinforcing member not covered by the present invention;
- FIG. 8: is an enlarged sectional view along the line D-D in FIG.7;
- FIG. 9: is a sectional view of a third reinforcing member not covered by the present invention;
- FIG. 10: is an enlarged sectional view along the line E-E in FIG.9;
- FIG. 11: is a sectional view of the reinforcing member according to a fourth embodiment;
- FIG. 12: is a top plan view of the reinforcing member according to the fourth embodiment;
- FIG. 13: is a sectional view illustrating the inner structure of the hydraulic damper of the reinforcing member according to the fourth embodiment;
- FIG. 14: is a broken sectional side view of the mounting part showing a first example of the mounting structure of the reinforcing member according to the fourth embodiment;
- FIG. 15: is a top plan view of the mounting part showing the first example of the mounting structure of the reinforcing member according to the fourth embodiment;
- FIG. 16: is a broken sectional side view of the mounting part showing a second example of the mounting structure of the reinforcing member according to the fourth embodiment;
- FIG. 17: is a top plan view of the mounting part showing the second example of the mounting structure of the reinforcing member according to the fourth embodiment;
- FIG. 18: is a perspective view of the engine compartment section of an automobile showing an example of a conventional reinforcing member in use; and
- FIG. 19: is a perspective view of the lower surface of the front of the automobile showing the example of the conventional reinforcing member in use.

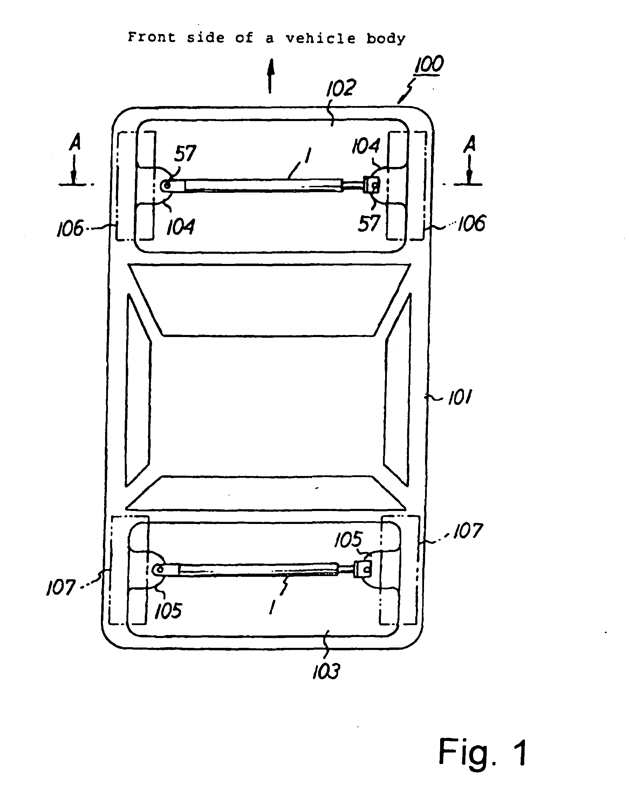

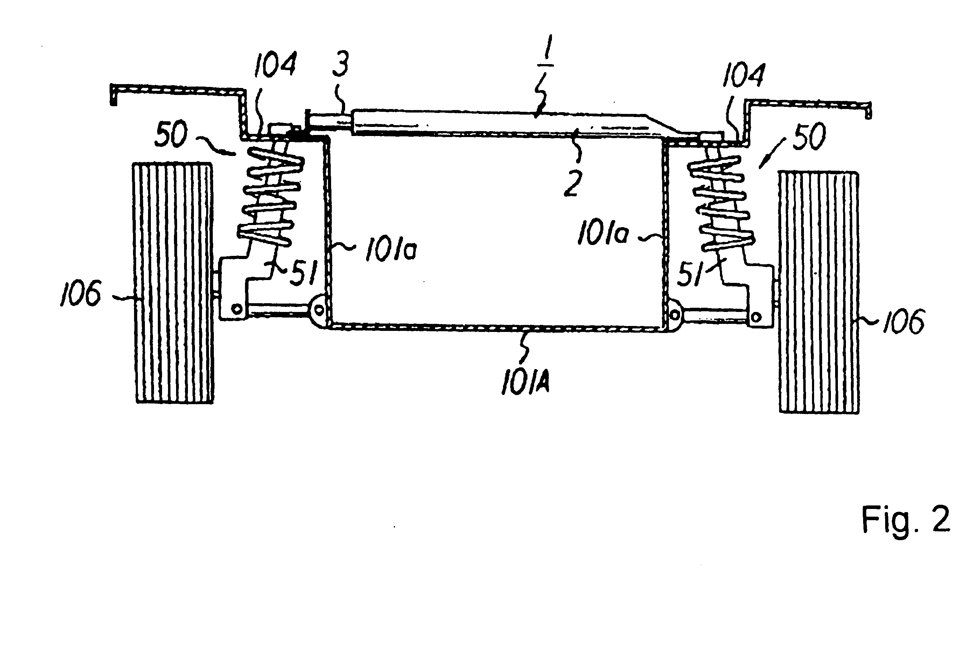

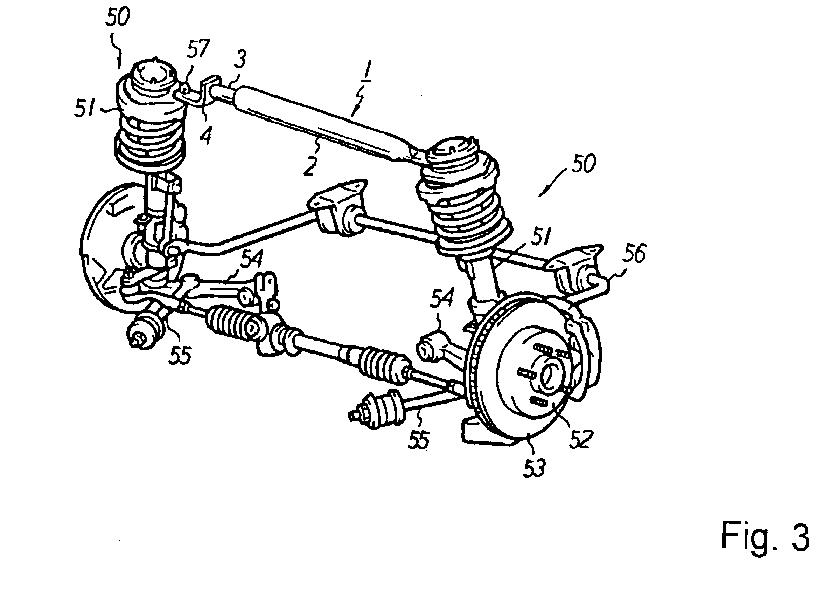

FIG. 1 is a schematic top plan view of an automobile, showing an example of the reinforcing member according to a first embodiment in use; FIG. 2 is a sectional view along the line A-A in FIG. 1; and FIG. 3 is a perspective view of a front suspension system.

FIG. 1 shows an engine compartment 102 and a trunk room 103 formed in the front and rear parts of a vehicle body 101 of an automobile 100, respectively (the upside of FIG. 1 is the front side of the vehicle body). Opposite walls (suspension towers) 104 on the right and left of the engine compartment 102 are coupled together with a reinforcing member 1 according to the first embodiment. Similarly, opposite walls (suspension towers) 105 on the right and left of the trunk room 103 are also coupled together for reinforcement with the reinforcing member 1 according to the first embodiment.

On the other hand, the front and rear parts of the vehicle body 101 are drivably supported by right-and-left pairs of front and rear wheels 106, 107. The front wheels 106 are suspended from the vehicle body 101 with the front suspensions 50 as shown in FIGS. 2 and 3, and likewise, the rear wheels 107 are suspended from the vehicle body 101 with the rear suspension system (not shown).

The structure of the front suspension system 50 is now described below with respect to FIGS. 2 and 3. The structure of the rear suspension system is essentially the same as that of the front suspension system 50, of which illustration and description are omitted.

Each one of the right and left front suspensions 50 has a shock absorber 51, the upper end of which is attached to the opposite walls (suspension towers) 104 constituting part of a frame 101A of the vehicle body. By each bottom end of the shock absorbers 51 are rotatably supported a hub 52 and a brake disk 53. The front wheel 106 is attached to each one of the hubs 52. In FIG. 3 are shown lower suspension arms 54, strut bars 55 and a stabilizer 56.

As shown in FIG. 2, the reinforcing member 1 according to the first embodiment couples together the open ends on the upper sides of the right and left sidewalls 101 a of the frame 101 A of the vehicle body. The reinforcing member 1 reinforces the frame 101 A of the vehicle body to enhance its rigidity.

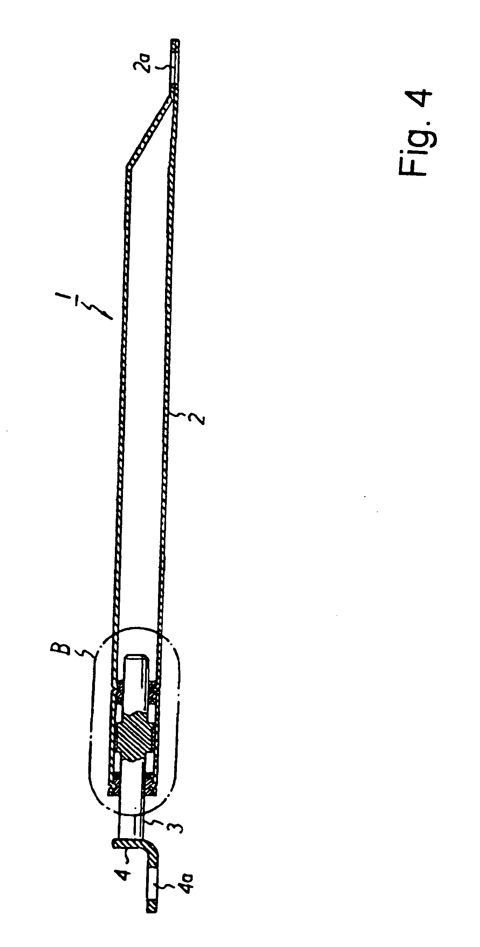

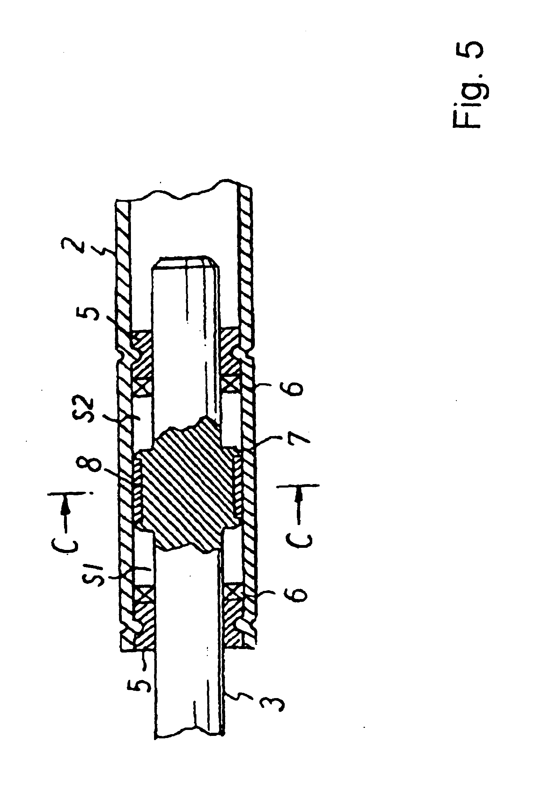

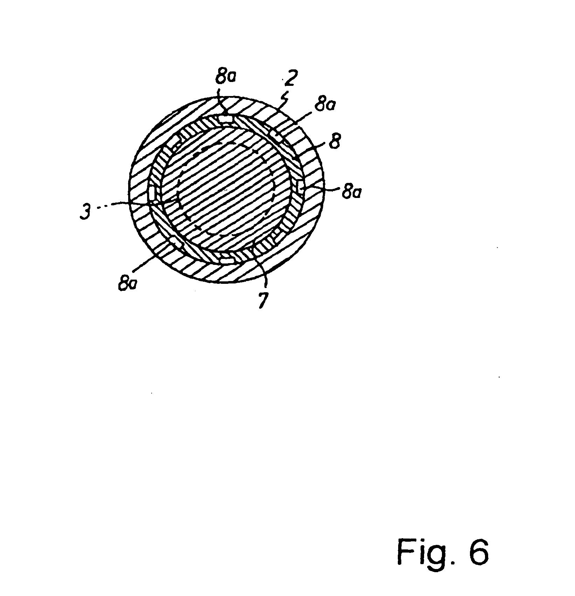

The details of the structure of the reinforcing member 1 according to the first embodiment are described hereafter in accordance with FIGS. 4 to 6. FIG. 4 is a sectional view of the reinforcing member, FIG. 5 is an enlarged detail view of the area B in FIG. 4, and FIG. 6 is an enlarged sectional view along the line C-C in FIG. 5.

The reinforcing member 1 according to this embodiment is comprised of a short metallic piston rod 3 inserted from an opening at one end of a long metallic cylinder 2. The other end of the cylinder 2 is crashed to form a flat surface, in which a circular through-hole 2a is disposed, as illustrated in the drawing. Also, to the end of the piston rod 3 extending out of the cylinder 2 is secured a L-shaped mounting bracket 4, which is also provided with a circular hole 4a.

As illustrated in detail in FIG. 5, the piston rod 3 is slidably inserted into the cylinder 2 through two rod guides 5 being closely fitted at an appropriate distance along the internal periphery on the opening side of the cylinder 2 and through seal rings 6 arranged inside of those rod guides 5. A piston 7 is formed integrally in the intermediate part of the piston rod 3 that is sandwiched between the two rod guides 5. The piston 7 is slidably fitted in the internal peripheral surface of the cylinder 2 through a piston ring 8 closely fitted along the external periphery of the piston 7. In the cylinder 2 are formed oil chambers S1, S2 defined by the piston 7 and the seal rings 6.

The above oil chambers S1, S2 are filled with oil. Through the piston ring 8 are disposed multiple helical-groove-like orifices 8a, as shown in FIG. 6, through which both oil chambers S1, S2 are mutually communicated.

Thus, the reinforcing member 1 having the aforementioned constitution constitutes a hydraulic damper, or an oil damper as a whole. As illustrated in FIG. 1, one end of the cylinder 2 is attached to (left) one of the opposite walls (suspension towers) 104 with a bolt 57 (see FIGS. 1 and 3) being inserted through the circular hole 2a (see FIG. 4). One end of the piston rod 3 is attached to the other (right) one of the opposite walls (suspension towers) 104 with the bolt 57 (see FIG. 1) being inserted through the circular hole 4a (See FIG. 4) disposed in the mounting bracket 4.

In the above structure, when the axial compressive force acts on the reinforcing member 1 by the relative motion between the sidewalls 101a of the vehicle body frame 101A during the running of the automobile 100, the piston rod 3 and piston 7 slide rightward in FIG. 4, relative to the cylinder 2. Accordingly, the oil in the one oil chamber S2 flows into the other oil chamber S1 through the orifices 8a disposed through the piston ring 8. This oil flow produces the viscous damping force.

Also, when the axial tensile force acts on the reinforcing member 1, the piston rod 3 and piston 7 slide leftward in FIG. 4, relative to the cylinder 2. Thus, the oil in one chamber S1 flows into the other oil chamber S2 through the orifices 8a disposed through the piston ring 8. This oil flow produces the viscous damping force.

In such a manner as described, when the axial force being applied, the reinforcing member 1 according to the embodiment functions as a hydraulic damper to generate viscous damping force. This viscous damping force can reduce the velocity and overshooting of deformation of the reinforcing member 1 in the axial direction. Accordingly, the vibratory deformation of the vehicle body 101 can be reduced without extremely enhancing the static rigidity of the reinforcing member 1, resulting in the improvement of the drivability of and the comfortableness to ride the automobile 100. Also, it is not necessary to excessively enhance the static rigidity of the reinforcing member 1, so that the increase in weight of the reinforcing member 1 and the stress concentration at the periphery of the mounting parts can be prevented. Therefore, major modification to the vehicle body 101 will be unnecessary.

Also, according to the embodiment, since the reinforcing member 1 functions as a hydraulic damper, the range of free setting for the damping characteristics becomes wider, and the damping characteristics can be successfully stabilized. Additionally, in the reinforcing member 1, if the damping force characteristic on the tension side of axial deformation is different from that on the compression side, then more ideal damping characteristic can be attained for the pattern inputted in the vehicle body 101 during the actual running of the automobile 100.

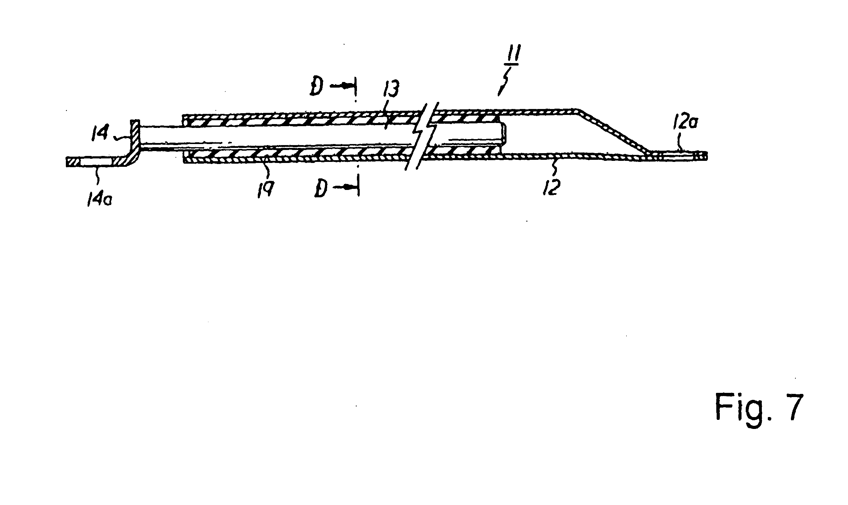

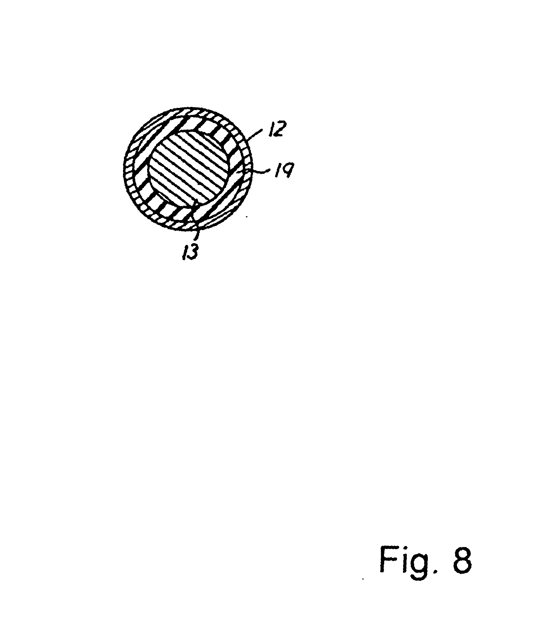

A second reinforcing member not covered by the present invention is now described below based on FIGS. 7 and 8. FIG. 7 is a sectional view of the reinforcing member, and FIG. 8 is an enlarged view sectioned along the line D-D in FIG. 7.

A reinforcing member 11 is constituted to couple a cylinder 12 and a rod 13 inserted therein with a rubber-made viscoelastic member 19. To the end of the rod 13 extending outside the cylinder 12 is secured a L-shaped mounting bracket 14, through which a circular hole 14a is disposed. In the flat mounting part at one end of the cylinder 12 is also disposed a circular through-hole 12a.

Thus, when the axial force acts on the reinforcing member 11 , the rubber-made viscoelastic member 19 is subject to the elastic deformation (shear deformation) to produce desired viscous damping force. That way, a similar effect to that of the first embodiment can be achieved. Also, since the damping force generating means of the reinforcing member 11 is comprised of the viscoelastic member 19 coupling the cylinder 12 to the rod 13, the structure of the reinforcing member 11 can be simplified, and the increase in size and cost can be prevented as well.

The adhesive strength where the viscoelastic member 19 is bonded to the cylinder 12 and the rod 13 is already set so that they can be peeled off when the excessive stress beyond that in usual running acts, such as in a car crash. This helps to break the reinforcing member 11 when the vehicle goes through a crash, thereby to allow the vehicle body to absorb the shock caused by the deformation.

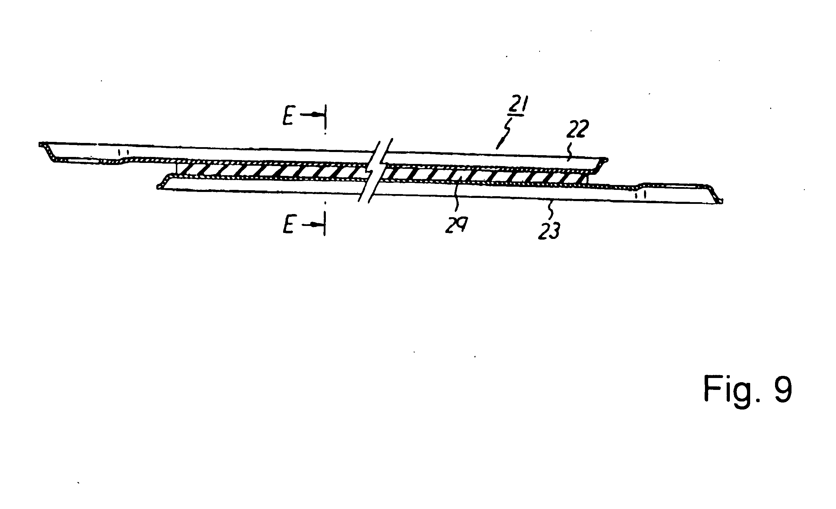

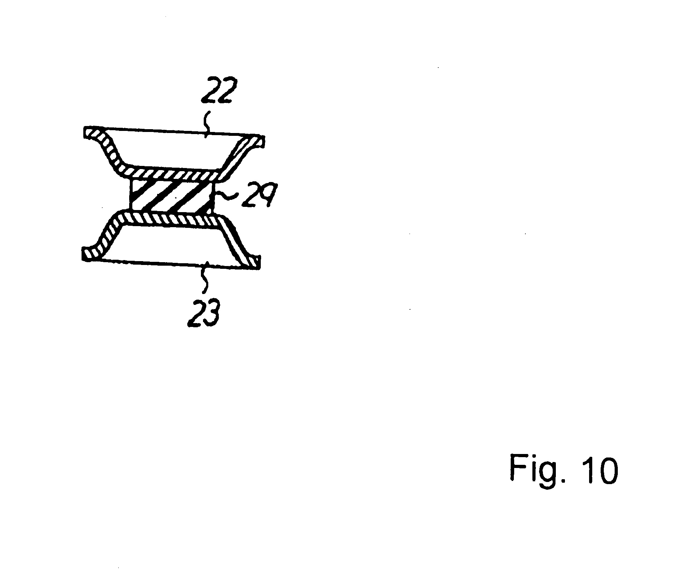

A third reinforcing member not covered by the present invention is now described below in accordance with FIGS. 9 and 10. FIG. 9 is a sectional view of the reinforcing member, and FIG. 10 is an enlarged view, sectioned along the line E-E in FIG. 9.

A reinforcing member 21 is constituted such that two metallic channel members 22, 23 having a flat surface are superimposed with their surfaces being faced each other, and coupled together by baking a rubber-made viscoelastic member 29 intervening between both metallic members 22, 23.

Thus, when axial force acts on the reinforcing member 21, the rubber-made viscoelastic member 29 is subject to elastic deformation (shear deformation) to produce desired viscous damping force. Therefore, a similar effect to that of the first embodiment can be achieved. Also, since the reinforcing member 21 is constituted in a simple manner by coupling the two metallic members 22, 23 together with the viscoelastic member 29, the structure of the reinforcing member 21 can be simplified, and the increase in size and cost can also be prevented.

In addition, the adhesive strength where the viscoelastic member 29 is bonded to the metallic members 22, 23 is already set so that they can be peeled off when the excessive stress beyond that in usual running acts, such as in a car crash. This helps to break the reinforcing member 21 when the vehicle goes through a crash, thereby to allow the vehicle body to absorb the shock caused by the deformation.

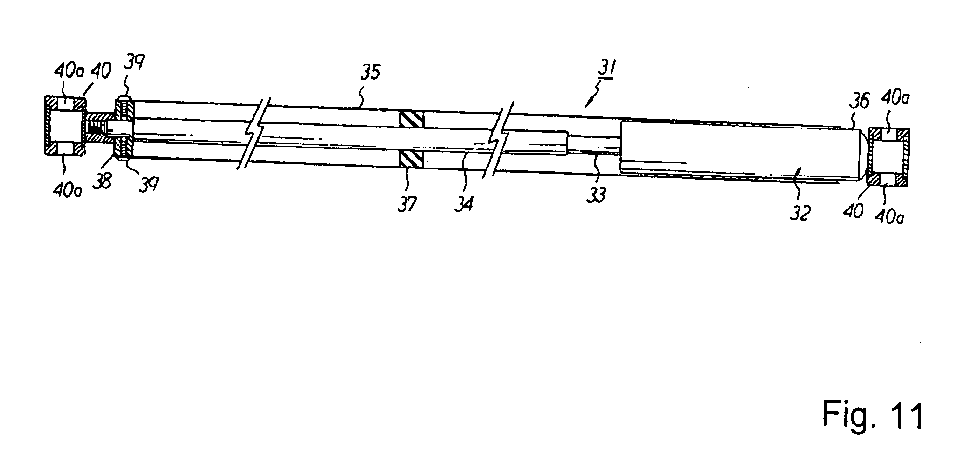

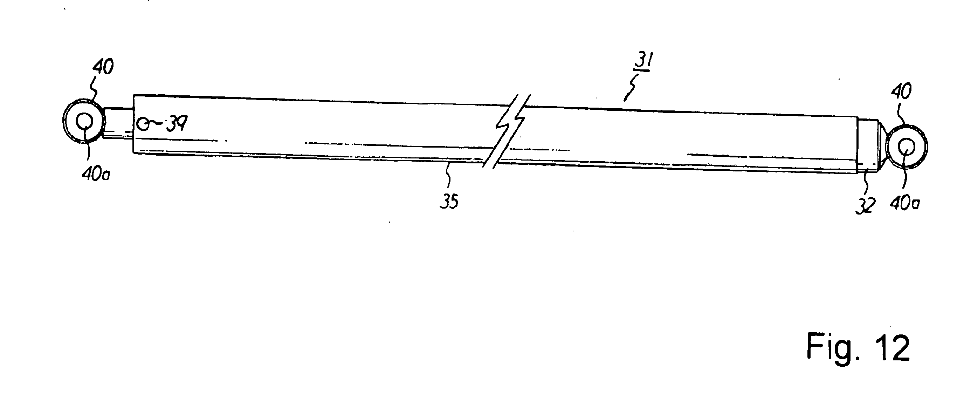

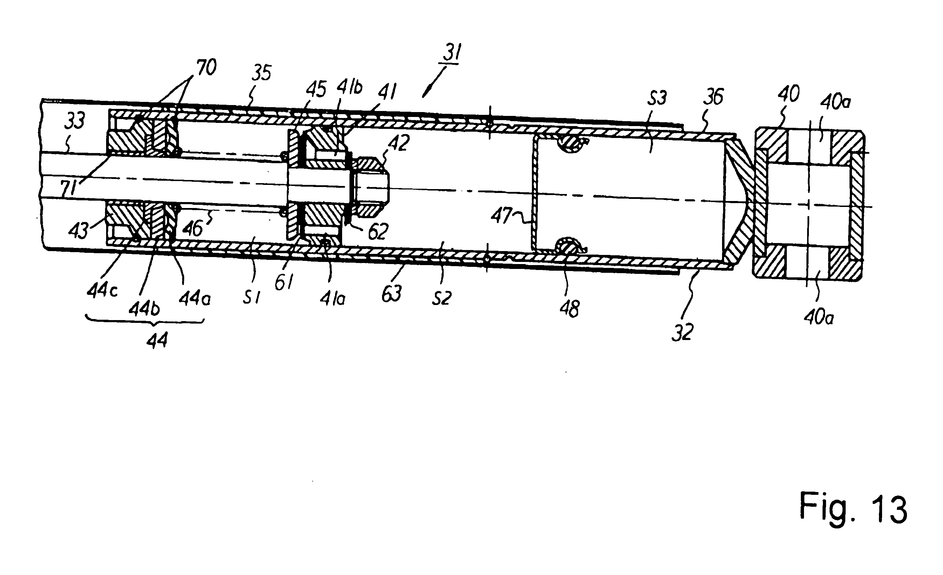

A fourth embodiment is now described below in accordance with FIGS. 11 to 13. FIG. 11 is a sectional view of the reinforcing member according to the fourth embodiment; FIG. 12 is a top plan view of the same reinforcing member; and FIG. 13 is a sectional view, illustrating the inner structure of the hydraulic damper of the same reinforcing member.

A reinforcing member 31 according to this fourth embodiment is constituted such that an elongated rod 34 is coaxially interconnected to a piston rod 33 of a hydraulic damper 32, and the rod 34 and hydraulic damper 32 are covered with a cylindrical cover 35.

One end of the cover 35 is slidably fitted onto a cylinder 36 of the hydraulic damper 32. The intermediate part of the cover 35 is supported by a ring-like rubber bushing 37. The other end is attached to a support member 38 secured to the end of the rod 34 with two screws 39.

To either end of the reinforcing member 31 (the end of the hydraulic damper 32 and the end of the rod 34) are secured cylindrical joints 40, through each of which a circular hole 40a is coaxially formed.

The detail structure of the above-mentioned hydraulic damper 32 is now described below in accordance with FIG. 13.

In respect of the hydraulic damper 32, one end of the piston rod 33 is inserted into the cylinder 36. To the end of the piston rod 33 facing the inside of the cylinder 36 is secured a piston 41 with a nut 42. The piston rod 33 extends out of the cylinder 36 through a rod guide 43 closely fitted with the internal periphery of one end on the opening side of the cylinder 36 and a seal ring 44 provided on the inside of the rod guide 43. The rod 34 (see FIG. 11) is coaxially screwed onto the extension end of the piston rod 33.

The seal ring 44 includes a washer 44a, a gasket 44b, and an oil seal 44c and is attached to the internal periphery of the cylinder 36 with two clips 70. Also, a slide bushing 71 is attached to the internal peripheral section of the rod guide 43 (pass-through section of the piston rod 33).

A compression spring 46 as an elastic member to constitute an axial force cancellation means is arranged between the seal ring 44 on the external periphery of the piston rod 33 and a spring sheet 45. The piston 41 and the piston rod 33 are biased in one direction with the compression spring 46.

A free piston 47 is slidably fitted in the cylinder 36 through an O-ring 48. The oil chambers S1, S2 and a gas chamber S3 are defined by the piston 41 and the free piston 47 within the cylinder 36. The oil chambers S1, S2 are filled with oil, and the gas chamber S3 is filled with inert gas, such as nitrogen.

In the piston 41 are formed a plurality of oil galleries 41 a, 41 b to serve as orifices. Valves 61, 62 for separately opening and closing the oil galleries 41 a, 41 b are provided on both end surfaces of the piston 41. The opening and closing of the valves 61, 62 enables the oil chambers S1 and S2 to selectively communicate through the oil galleries 41 a, 41 b.

A slide bushing 63 made of Teflon is bonded to the external periphery of the cylinder 36. One end of the cover 35 is slidably fitted onto the cylinder 36 through the slide bushing 63.

Thus, in the fourth embodiment, when axial force acts on the reinforcing member 31, the piston rod 33 and the rod 34 are displaced relative to the cylinder 36 of the hydraulic damper 32, and the piston 41 secured to the piston rod 33 slides within the cylinder 36.

Accordingly, when axial compressive force acts on the reinforcing member 31, the piston 41 slides rightward within the cylinder 36 in FIG. 13. Thus, the oil in the one oil chamber S2 pushes the valve 61 open through the oil galleries 41 a of the piston 41 to flow into the other oil chamber S1. This oil flow causes the hydraulic damper 32 to generate viscous damping force.

Also, when axial tensile force acts on the reinforcing member 31, the piston 41 slides leftward within the cylinder 36 in FIG. 13. Thus, the oil in the one oil chamber S1 pushes the valve 62 open through the oil galleries 41 b of the piston 41 to flow into the other oil chamber S2. This oil flow causes the hydraulic damper 32 to generate the viscous damping force. In addition, increase and decrease in capacity of the cylinder 36 corresponding to the extension and retraction movement of the piston rod 33 relative to the cylinder 36 can be counteracted by expansion or contraction of the gas inside the gas chamber S3 due to the free piston 47 sliding within the cylinder 36.

Thus, as with the reinforcing member 1 with respect to the first embodiment, when axial force being applied, the reinforcing member 31 according to the fourth embodiment functions as a hydraulic damper, to generate the viscous damping force. Consequently, a similar effect to that of the first embodiment can be achieved in this embodiment as well. Additionally, like the first embodiment, when the damping force characteristics of the hydraulic damper 32 to function as a hydraulic damper are varied on the tension and compression sides of the axial deformation, respectively, more ideal damping characteristics can be obtained for the pattern inputted in the vehicle body during the actual running of the vehicle.

In load-free condition in which no axial load acts on either end of the hydraulic damper 32 of the reinforcing member 31, the internal pressure inside of the gas chamber S3 applies the axial force to try to push the piston rod 33 out of the cylinder 36 to the piston rod 33. In this embodiment, however, since the piston 41 and the piston rod 33 are biased in the opposite direction to that of the axial force being applied with the compression spring 46, just about the entire axial force to try to push out the piston rod 33 can be cancelled by the bias force of the compression spring 46. Thus, the excessive input into the vehicle body can be reduced, and also the length of the hydraulic damper 32 can be nearer to the assembly size in the unloaded condition, thereby facilitating to mount the reinforcing member 31 onto the vehicle body.

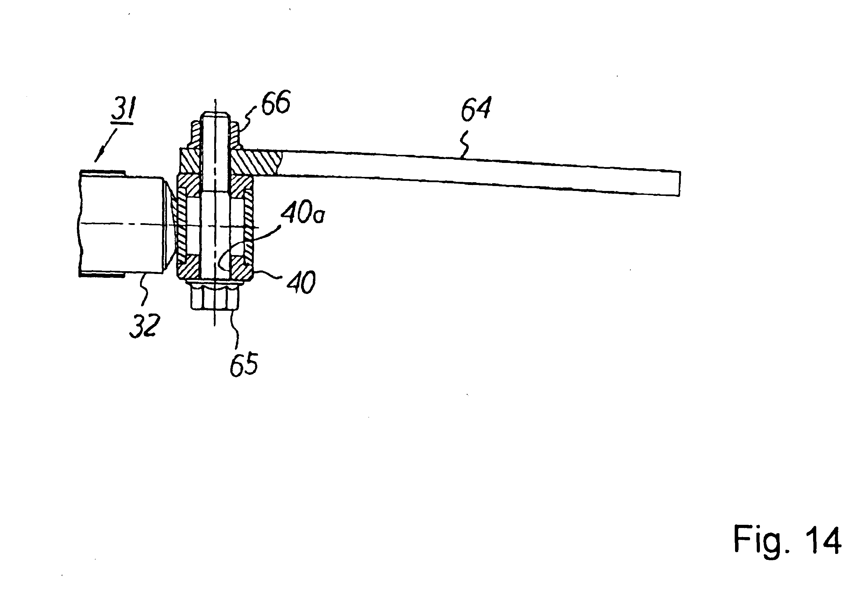

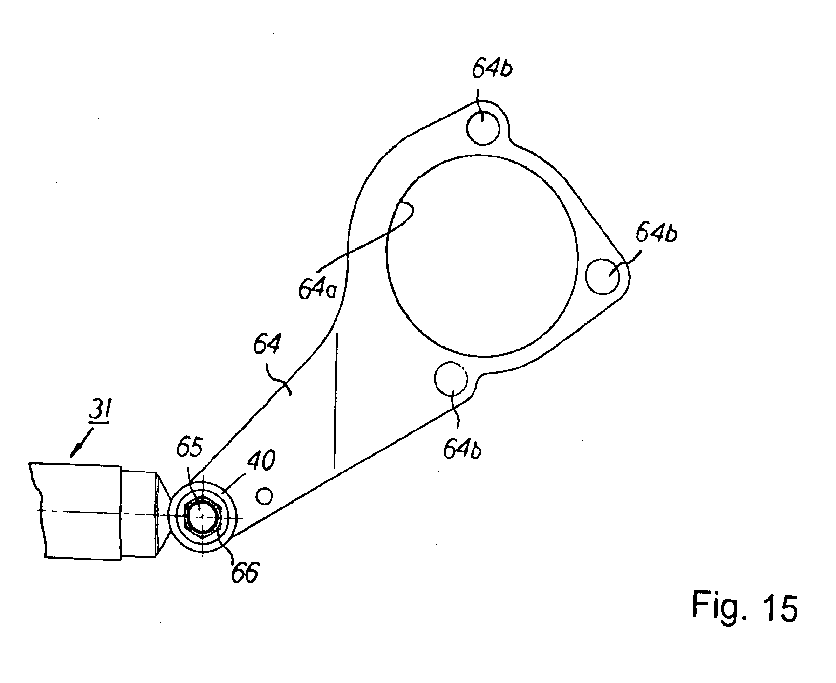

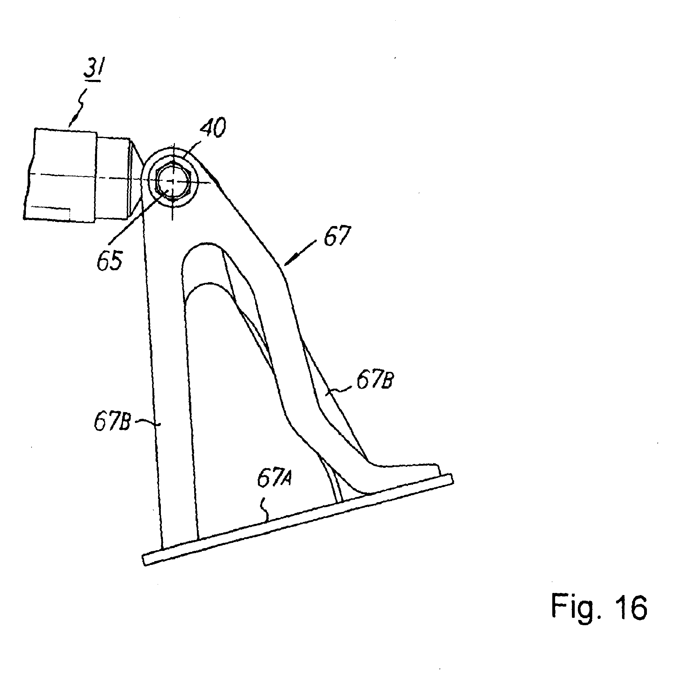

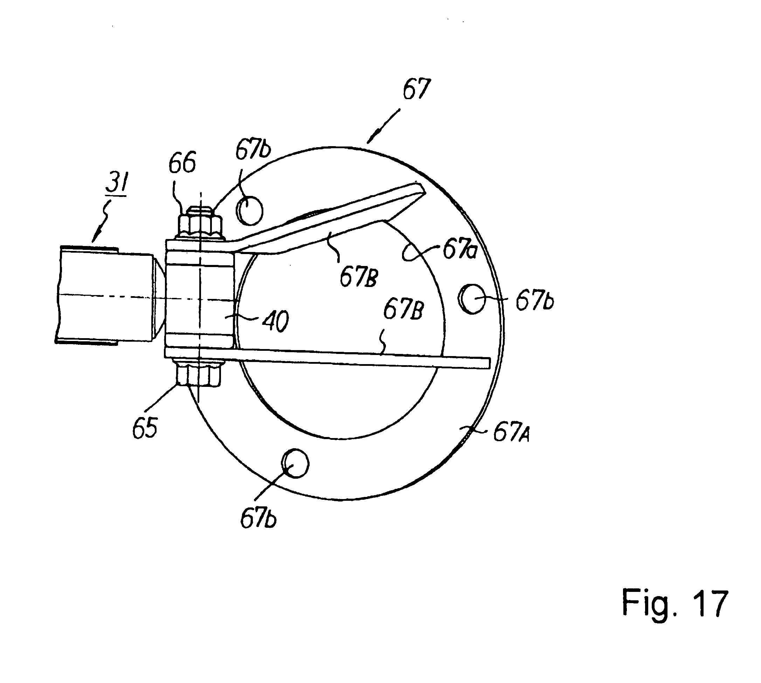

Now two examples of the structure for mounting the reinforcing member 31 are shown in FIGS. 14 and 15, and FIGS. 6 and 17, respectively. FIGS. 14 and 16 are partially sectional side views of the mounting part of the reinforcing member, and FIGS. 15 and 17 are top plan views of the same mounting part.

These figures show only one of the mounting parts of the reinforcing member. Each structure of the other mounting parts is equal to that of the one mounting parts, of which illustration and description are omitted.

In the example shown in FIGS. 14 and 15, a plate-like mounting bracket 64 is attached to the joint 40 secured to one end of the reinforcing member 31 with a bolt 65 and a nut 66.

More specifically, the mounting bracket 64 is secured to the joint 40 such that a bolt 65 passing through a circular through-hole in the joint 40 is inserted in a through-hole of the mounting bracket 64 and then a nut 66 is engaged with the bolt 65 to tighten. Also, as shown in FIG. 15, in the mounting bracket 64 is formed a large circular hole 64a, around which three small circular holes 64b are formed.

Thus, when the reinforcing member 31 is attached, for example, to the upper parts of the right and left front suspensions of the automobile, the heads of the front suspensions are fitted into the circular holes 64a of the respective mounting brackets 64, and then the mounting brackets 64 are attached to the upper parts of the front suspensions with the bolts (not shown) to be inserted into the three circular holes 64b. In this way, the reinforcing member 31 can be attached to the upper parts of the right and left front suspensions.

In the example shown in FIGS. 16 and 17, a tower-like mounting bracket 67 is attached to the joint 40 of the reinforcing member 31 with the bolt 65 and the nut 66 in the similar manner to the above.

The mounting bracket 67 is constituted in the shape of a tower arranging in a standing manner two plates 67B on a ring-like plate 67A and a circular hole 67a is formed. Around the circular hole 67a of the plate 67A are formed three small circular holes 67b.

Thus, in this example as well, when the reinforcing member 31 is attached, for example, to the upper parts of the right and left front suspensions of the automobile, the heads of the front suspensions are fitted into the circular holes 67a of the respective mounting brackets 67, and then the mounting brackets 67 are attached to the upper parts of the front suspensions with the bolts (not shown) to be inserted into the three circular holes 67b. In this way, the reinforcing member 31 can be attached to the upper parts of the right and left front suspensions.

It will be naturally understood that the use of the reinforcing member is not limited to the embodiments described above.

It will be apparent from the above description that the reinforcing member for vehicles according to the embodiments which is attached to the reinforcing part of the vehicle body and to which the axial force is mainly applied is provided with the damping force generating means for generating the viscous damping force against the axial deformation. The vehicle body structure is constituted by coupling the opposite sides of the frame of the vehicle body together with the reinforcing member for vehicles. Thus, the viscous damping force generated by the damping force generating means can reduce the velocity and overshooting of the axial deformation of the reinforcing member. Also, the vibration of the vehicle body in connection with the motion of the opposite sides of the frame of the vehicle body can effectively be absorbed with the damping force. Consequently, the drivability of and comfortableness to ride the vehicle can be upgraded without incurring any increase in weight and stress concentration in the periphery of the mounting parts.

The embodiments described above refer to a vehicle reinforcing member which is attached to the reinforcing part of the vehicle body and to which the axial force is mainly applied, comprising a damping force generating means for generating viscous damping force against the axial deformation.

The damping force generating means comprises a hydraulic damper, or an oil damper for generating damping force by liquid and orifices.

The damping force characteristics of the damping force generating means are varied on the tension and compression sides of the axial deformation, respectively.

The hydraulic damper, or the oil damper comprises a cylinder, a piston mounted inside the cylinder and a piston rod extending outside the cylinder from the piston, two chambers are formed on both sides of the piston in the cylinder, a gas chamber defined by a free piston is formed in the piston, the two chambers are filled with liquid, orifices are formed in the piston for communicating the both chambers, and gas is charged in the gas chamber. It is also preferable if an axial force cancellation means is provided in order to cancel the force of axially pushing the piston rod out with the pressure inside the gas chamber in the unloaded condition in which no axial force is applied to either end of the hydraulic damper. The axial cancellation means may comprise an elastic member for biasing the piston and piston rod in one direction.

The embodiments described above also refer to a damping force generating means comprising a viscoelastic member for coupling two members together.

Also a vehicle body structure is disclosed which is constituted by coupling opposite sides of a frame of the vehicle body together with a vehicle reinforcing member provided with a damping force generating means to generate viscous damping force against the axial deformation.

Therein, it is preferable if the open ends of the frame of the vehicle body are coupled together with the vehicle reinforcing member.

The reinforcing member for vehicles enables drivability of and comfortableness to ride the vehicle to be upgraded without causing any increased weight and stress concentration in the periphery of the mounting parts.

The vehicle reinforcing member which is attached to the reinforcing part of the vehicle body and to which an axial force is mainly applied is provided with a damping force generating means (a hydraulic damper, or an oil damper) to generate viscous damping force against the axial deformation.

The viscous damping force to be generated by the damping force generating means is capable of reducing the velocity and overshooting of the axial deformation of the reinforcing member. This helps to reduce the vibratory deformation of the vehicle body without extremely enhancing the static rigidity of the reinforcing member to improve the drivability of and comfortableness to ride the vehicle. Also, it is not necessary to excessively enhance the static rigidity of the reinforcing member, so that the increase in weight and the stress concentration in the periphery of the mounting parts of the reinforcing member can be prevented. Therefore, major modification to the vehicle body will be unnecessary.

The description above discloses (among others) an embodiment of a reinforcement structure of a vehicle body for reinforcing same against axial loads acting on said vehicle body, wherein a reinforcing member 1, 11, 21, 31 is provided having a damping force generating means for generation of a viscous damping force against said axial load applied to the reinforcing member 1, 11, 21, 31.

Preferably, the reinforcing member 1, 11, 21, 31 interconnects opposite walls, in particular open ends of the reinforcement structure 101A of the vehicle body, wherein an axial deformation of the reinforcing member 1, 11, 21, 31 is caused by an axial compression force or an axial tension force generated by a relative motion between the opposite walls of the reinforcement structure 101 A.

Preferably, a first element of the reinforcing member 1, 11, 21, 31 is attached to one of the opposite walls of the reinforcement structure 101 A, and a second element is attached to the respective other wall of the opposite walls of the reinforcement structure 101A, wherein the first and the second element are arranged in a predetermined relationship to each other and the damping force generating means is adapted to generate a restoring force against a relative movement of the first and the second element.

Further, the damping force generating means comprises a hydraulic damper or an oil damper for generating the damping force by means of a hydraulic liquid and at least one orifice.

A damping force characteristic on a compression side of the axial deformation of the damping force generating means is different from that on a tension side of the axial deformation of the damping force generating means.

It is also preferable that a piston rod 3 has a piston 7 integrally formed in an intermediate part of the piston rod 3, a cylinder 2, wherein the piston rod 3 is inserted into the cylinder 2 and the piston 7 is slidably fitted in the internal peripheral surface of the cylinder 2 by means of a piston ring 8, and two oil chambers S1, S2 are filled with a hydraulic liquid and provided on opposite sides of the piston 7, wherein the piston ring 8 comprises multiple orifices 8a enabling liquid communication between the oil chambers S1, S2.

Preferably, the damping force generating means comprises a cylinder 36 and an elongated rod 34, wherein the elongated rod 34 is interconnected to a piston rod 33 of the hydraulic damper 32.

Further, preferably a piston 41 is mounted inside the cylinder 36, wherein the piston rod 33 extends outside the cylinder 36 from the piston 41, two chambers S1, S2 are filled with a hydraulic liquid and arranged on opposite sides of the piston 41 in the cylinder 36, wherein orifices are formed in the piston 41 for communicating the both chambers S1, S2, and a charged gas chamber S3 is defined by a free piston 47 provided in the cylinder 36.

Still further, preferably an axial force cancellation means is adapted to cancel the force of axially pushing the piston rod 33 out with the pressure inside the gas chamber S3 in the unloaded condition in which no axial force is applied to either end of the hydraulic damper 32, wherein the axial force cancellation means comprises an elastic member 46 for biasing the piston 41 and piston rod 33 in one direction.

## Claims

1. Vehicle body frame having a reinforcement structure comprising a reinforcing member (1,31) interconnecting two points to be reinforced of the vehicle body frame (101A) and having a damping force generating means generating a viscous damping force against axial deformation of the reinforcing member (1,31) caused by relative motion between these points of the vehicle body frame (101A) during
the running of the vehicle (100) to reduce vibratory deformation of the vehicle body frame (101A),
the damping force generating means comprising a hydraulic damper (32), in particular an oil damper, for generating the damping force by means of a hydraulic liquid, wherein the hydraulic damper (32) has a cylinder (2,36), a piston (7,41), a piston rod (3,33), oil chambers (S1, S2) defined by the piston (7, 41), and at least one orifice (8a,41 a,41 b), and
both oil chambers (S1, S2) being mutually communicated through the orifice (8a,41 a,41 b), wherein a damping force characteristic on a compression side of the axial deformation of the damping force generating means is different from that on a tension side of the axial deformation of the damping force generating means.

2. Vehicle body frame according to claim 1, wherein the reinforcing member (1,31) interconnects opposite walls, in particular open ends of the vehicle body frame (101A), wherein an axial deformation of the reinforcing member (1,31) is caused by an axial compression force or an axial tension force generated by a relative motion between the opposite walls of the vehicle body frame (101 A).

3. Vehicle body frame according to claim 1 or 2, wherein the reinforcement structure comprises a first element of the reinforcing member (1,31), attached to one of the opposite walls of the vehicle body frame (101A), and a second element, attached to the respective other wall of the opposite walls of the vehicle body frame (101A), wherein the first and the second elements are arranged in a predetermined relationship to each other and the damping force generating means is adapted to generate a dampening force against a relative movement of the first and the second elements.

4. Vehicle body frame according to one of claims 1 to 3, wherein the piston (7) is integrally formed in an intermediate part of the piston rod (3); the piston rod (3) is inserted into the cylinder (2); and the piston (7) is slidably fitted in the internal peripheral surface of the cylinder (2) by means of a piston ring (8); and the piston ring (8) comprises multiple orifices (8a) enabling liquid communication between the oil chambers (S1, S2) filled with the hydraulic liquid and being provided on opposite sides of the piston (7).

5. Vehicle body frame according to one of claims 1 to 3, wherein the damping force generating means comprises an elongated rod (34), wherein the elongated rod (34) is interconnected to the piston rod (33) of the hydraulic damper (32).

6. Vehicle body frame according to one of claims 1 to 5, wherein the piston (41) is mounted inside the cylinder (36), wherein the piston rod (33) extends outside the cylinder (36) from the piston (41), and wherein the orifices (41a,41b) are formed in the piston (41) for communicating the both chambers (S1, S2) filled with the hydraulic liquid and being arranged on opposite sides of the piston (41) in the cylinder (36), and further comprising a charged gas chamber (S3) defined by the free piston (47) provided in the cylinder (36).

7. Vehicle body frame according to claim 6, wherein the reinforcement structure comprises an axial force cancellation means (46) adapted to cancel the force of axially pushing the piston rod (33) out with the pressure inside the gas chamber (S3) in the unloaded condition in which no axial force is applied to either end of the hydraulic damper (32), wherein the axial force cancellation means comprises an elastic member (46) for biasing the piston (41) and piston rod (33) in one direction.

8. Vehicle body frame according to one of claims 5 to 7, wherein the reinforcement structure comprises a cover (35), wherein one end of the cover (35) is slidably fitted onto the cylinder (36) of the hydraulic damper (32), an intermediate part of the cover (35) is supported by a ring-like rubber bushing (37), and the other end of the cover (35) is attached to a support member (38) secured to an end of the elongated rod (34).

## Patentansprüche

1. Fahrzeugkarosserierahmen mit einem Verstärkungsaufbau, aufweisend ein Verstärkungsteil (1, 31), das zwei zu verstärkende Punkte des Fahrzeugkarosserierahmens (101 A) verbindet und der eine Dämpfungskraft- Erzeugungseinrichtung hat, die eine viskose Dämpfungskraft erzeugt gegen axiale Verformung des Verstärkungsteils (1, 31), verursacht durch eine relative Bewegung zwischen diesen Punkten des Fahrzeugkarosserierahmen (101A) während der Fahrt des Fahrzeuges (100), um eine Schwingungsverformung des Fahrzeugkarosserierahmens (101A) zu vermindern,
wobei die Dämpfungskraft- Erzeugungseinrichtung einen hydraulischen Dämpfer (32), insbesondere einen Öl- Dämpfer aufweist, um eine Dämpfungskraft mittels eines hydraulischen Fluids zu erzeugen, wobei der hydraulische Dämpfer (32) einen Zylinder (2, 36), einen Kolben (7, 41), eine Kolbenstange (3, 33), Ölkammern (S1, S2), gebildet durch den Kolben (7, 41), und zumindest eine Drosselstelle (8a, 41a, 41b) hat und
beide Ölkammern (S1, S2) miteinander durch die Drosselstelle (8a, 41 a, 41 b) verbunden sind, wobei eine Dämpfungskraftcharakteristik auf einer Druckseite der axialen Verformung der Dämpfungskraft- Erzeugungseinrichtung von derjenigen auf einer Zugseite der axialen Verformung der Dämpfungskraft- Erzeugungseinrichtung verschieden ist.

2. Fahrzeugkarosserierahmen nach Anspruch 1, wobei das Verstärkungsteil (1, 31) gegenüberliegende Wände, insbesondere offene Enden des Fahrzeugkarosserierahmens (101A), verbindet, wobei eine axiale Verformung des Verstärkungsteils (1, 31) durch eine axiale Druckkraft oder eine axiale Zugkraft, erzeugt durch eine relative Bewegung zwischen den gegenüberliegenden Wänden des Fahrzeugkarosserierahmens (101A), verursacht wird.

3. Fahrzeugkarosserierahmen nach Anspruch 1 oder 2, wobei der Verstärkungsaufbau aufweist ein erstes Element des Verstärkungsteils (1, 31), verbunden mit einer der gegenüberliegenden Wände des Fahrzeugkarosserierahmens (101A), und ein zweites Element, verbunden mit der jeweils anderen Wand der gegenüberliegenden Wände des Fahrzeugkarosserierahmens (101 A), wobei das erste und das zweite Element in einer vorbestimmten Beziehung zueinander angeordnet sind und die Dämpfungskraft- Erzeugungseinrichtung vorgesehen ist, eine Dämpfungskraft gegen eine Relativbewegung des ersten und zweiten Elements zu erzeugen.

4. Fahrzeugkarosserierahmen nach einem der Ansprüche 1 bis 3, wobei der Kolben (7) in einem Zwischenteil der Kolbenstange (3) einstückig gebildet ist; und der Kolben (7) gleitbar in die Umfangsoberfläche des Zylinders (2) mittels eines Kolbenrings (8) eingesetzt ist; und wobei der Kolbenring (8) die mehrfachen Drosselstellen (8a) aufweist, die in der Lage sind, zwischen den Ölkammern (S1, S2), gefüllt mit der hydraulischen Flüssigkeit und die auf gegenüberliegenden Seiten des Kolbens (7) vorgesehen sind, eine Flüssigkeitsverbindung zu gestalten.

5. Fahrzeugkarosserierahmen nach einem der Ansprüche 1 bis 3, wobei die Dämpfungskraft- Erzeugungseinrichtung eine langgestreckte Stange (34) aufweist, wobei die langgestreckte Stange (34) mit der Kolbenstange (33) des hydraulischen Dämpfers (32) verbunden ist.

6. Fahrzeugkarosserierahmen nach einem der Ansprüche 1 bis 5, wobei der Kolben (41) innerhalb des Zylinders (36) montiert ist, wobei sich die Kolbenstange (33) außerhalb des Zylinders (38) von dem Kolben (41) erstreckt, und wobei die Öffnungen (8a, 41 a, 41 b) in dem Kolben (41) gebildet sind, um beide Kammern (S1, S2), gefüllt mit der hydraulischen Flüssigkeit und auf gegenüberliegenden Seiten des Kolbens (41) in dem Zylinder (36) angeordnet, zu verbinden und außerdem aufweisend eine aufgeladene Gaskammer (S3), gebildet durch den freien Kolben (47), angeordnet in dem Zylinder (36).

7. Fahrzeugkarosserierahmen nach Anspruch 6, wobei der Verstärkungsaufbau aufweist eine Axialkraft- Aufhebungseinrichtung (46), vorgesehen, die axiale Druckkraft der Kolbenstange (33) mit dem Druck innerhalb der Gaskammer (S3) in dem unbelasteten Zustand aufzuheben, in dem keine Axialkraft auf kein Ende des hydraulischen Dämpfers (32) aufgebracht wird, wobei die Axialkraft- Aufhebungseinrichtung ein elastisches Teil (46) zum Vorspannen des Kolbens (41) und einer Kolbenstange (33) in eine Richtung aufweist.

8. Fahrzeugkarosserierahmen nach einem der Ansprüche 5 bis 7, wobei der Verstärkungsaufbau eine Abdeckung (35) aufweist, wobei ein Ende der Abdeckung (35) gleitbar auf den Zylinder (36) des hydraulischen Dämpfers (32) eingesetzt ist, ein Zwischenteil der Abdeckung (36) durch eine ringförmige Gummihülse (37) gelagert ist und das andere Ende der Abdeckung (35) mit einem Lagerteil (38), befestigt mit einem Ende der langgestreckte Stange (34), verbunden ist.

## Revendications

1. Châssis de véhicule avec une structure de renforcement qui comprend un organe de renforcement (1, 31) reliant deux points à renforcer du châssis de véhicule (101A), et avec des moyens générateurs de force d'amortissement qui génèrent une force d'amortissement visqueuse à l'encontre d'une déformation axiale de l'organe de renforcement (1, 31) causée par le mouvement relatif entre ces points du châssis (101A) pendant le déplacement du véhicule (100), afin de réduire la déformation vibratoire dudit châssis (101A),
les moyens générateurs de force d'amortissement comprenant un amortisseur hydraulique (32), en particulier un amortisseur à huile, pour générer la force d'amortissement à l'aide d'un liquide hydraulique, étant précisé que l'amortisseur hydraulique (32) a un cylindre (2, 36), un piston (7, 41), une tige de piston (3, 33), des chambres à huile (S1, S2) définies par le piston (7, 41), et au moins un orifice (8a, 41a, 41b), et
les deux chambres à huile (S1, S2) communiquant grâce à l'orifice (8a, 41a, 41b), étant précisé qu'une caractéristique de force d'amortissement sur un côté compression de la déformation axiale des moyens générateurs de force d'amortissement est différente de celle sur un côté tension de la déformation axiale des moyens générateurs de force d'amortissement.

2. Châssis de véhicule selon la revendication 1, étant précisé que l'organe de renforcement (1, 31) relie entre elles les parois opposées, en particulier les extrémités ouvertes, du châssis de véhicule (101A), étant précisé qu'une déformation axiale de l'organe de renforcement (1, 31) est provoquée par une force de compression axiale ou par une force de tension axiale générée par un mouvement relatif entre les parois opposées du châssis (101A).

3. Châssis de véhicule selon la revendication 1 ou 2, étant précisé que la structure de renforcement comprend un premier élément de l'organe de renforcement (1, 31), qui est fixé à l'une des parois opposées du châssis de véhicule (101A), et un second élément qui est fixé à l'autre paroi du châssis (101A), étant précisé que les premier et second éléments sont disposés suivant une relation mutuelle prédéterminée et que les moyens générateurs de force d'amortissement sont aptes à générer une force d'amortissement à l'encontre d'un mouvement relatif des premier et second éléments.

4. Châssis de véhicule selon l'une des revendications 1 à 3, étant précisé que le piston (7) est formé d'une seule pièce dans une partie intermédiaire de la tige de piston (3) ; que la tige de piston (3) est introduite dans le cylindre (2) ; et que le piston (7) est installé coulissant dans la surface périphérique interne du cylindre (2) à l'aide d'un segment de piston (8) ; et que le segment de piston (8) comporte plusieurs orifices (8a) qui permettent une communication de liquide entre les chambres à huile (S1, S2) remplies du liquide hydraulique et prévues sur les côtés opposés du piston (7).

5. Châssis de véhicule selon l'une des revendications 1 à 3, étant précisé que les moyens générateurs de force d'amortissement comprennent une tige allongée (34), étant précisé que la tige allongée (34) est reliée à la tige de piston (33) de l'amortisseur hydraulique (32).

6. Châssis de véhicule selon l'une des revendications 1 à 5, étant précisé que le piston (41) est monté à l'intérieur du cylindre (36), étant précisé que la tige de piston (33) s'étend à l'extérieur du cylindre (36), à partir du piston (41), et que les orifices (41a, 41b) sont formés dans le piston (41) pour faire communiquer les deux chambres (S1, S2) remplies du liquide hydraulique et disposées sur les côtés opposés du piston (41), dans le cylindre (36), et comprenant également une chambre de gaz chargée (S3) définie par le piston libre (47) prévu dans le cylindre (36).

7. Châssis de véhicule selon la revendication 6, étant précisé que la structure de renforcement comprend des moyens de neutralisation de force axiale (46) aptes à neutraliser la force de poussée axiale de la tige de piston (33) vers l'extérieur avec la pression à l'intérieur de la chambre de gaz (S3) à l'état non contraint dans lequel aucune force axiale n'est appliquée à aucune extrémité de l'amortisseur hydraulique (32), étant précisé que les moyens de neutralisation de force axiale comprennent un élément élastique (46) pour contraindre le piston (41) et la tige de piston (33) dans un sens.

8. Châssis de véhicule selon l'une des revendications 5 à 7, étant précisé que la structure de renforcement comprend un couvercle (35), étant précisé qu'une extrémité du couvercle (35) est installée coulissante sur le cylindre (36) de l'amortisseur hydraulique (32), qu'une partie intermédiaire du couvercle (35) est supportée par un manchon en caoutchouc de type annulaire (37) et que l'autre extrémité du couvercle (35) est fixée à un élément de support (38) fixé à une extrémité de la tige allongée (34).
